(19) Europäisches Patentamt
European Patent Office
Office européen des brevets

(11) **EP 4 241 438 B1**

(12) **EUROPEAN PATENT SPECIFICATION**

(45) Date of publication and mention
of the grant of the patent:
**12.03.2025 Bulletin 2025/11**

(21) Application number: **22701545.0**

(22) Date of filing: **12.01.2022**

(51) International Patent Classification (IPC):
***H04N 25/683*** (2023.01)

(52) Cooperative Patent Classification (CPC):
**H04N 25/683**

(86) International application number:
**PCT/EP2022/050520**

(87) International publication number:
**WO 2023/134846 (20.07.2023 Gazette 2023/29)**

(54) **METHOD AND IMAGE PROCESSOR UNIT FOR DETECTING DEFECTIVE PIXELS**

VERFAHREN UND BILDVERARBEITUNGSEINHEIT ZUR ERKENNUNG DEFEKTER PIXEL

PROCÉDÉ ET UNITÉ DE TRAITEMENT D'IMAGE POUR DÉTECTER DES PIXELS DÉFECTUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.09.2023 Bulletin 2023/37**

(73) Proprietor: **Shenzhen Goodix Technology Co.,
Ltd.
Shenzhen, Guangdong 518045 (CN)**

(72) Inventor: **EL-YAMANY, Noha
25436 Tornesch (DE)**

(74) Representative: **Kraus & Lederer PartGmbB
Thomas-Wimmer-Ring 15
80539 München (DE)**

(56) References cited:
**EP-B1- 2 419 879        WO-A1-2020/010638
KR-B1- 100 690 342        US-A1- 2004 051 798
US-A1- 2005 162 531        US-A1- 2006 126 127
US-A1- 2011 102 624**

• **J. BEDNAR ET AL: "Alpha-trimmed means and
their relationship to median filters", IEEE
TRANSACTIONS ON ACOUSTICS, SPEECH, AND
SIGNAL PROCESSING, vol. 32, no. 1, 1 February
1984 (1984-02-01), pages 145 - 153,
XP055044731, ISSN: 0096-3518, DOI: 10.1109/
TASSP.1984.1164279**

**Description**

The invention relates to a method for processing image data provided by the image sensor, the image data comprising an array of pixels.

The invention further relates to an image processor unit for processing image data provided by an image sensor, wherein the image data comprising an array of pixels.

The invention further relates to a computer program for carrying out the above-mentioned method.

Digital imagers are widely used in everyday products, such as smart phones, tablets, notebooks, cameras, cars and wearables. Many of the imaging systems in those products have the feature of automatic focusing (AF) in order to produce sharp images/videos. The traditional approach to automatic focusing is based on contrast detection. The lens is moved to the position where the scene contrast is the highest. Contrast automatic focusing is generally slow, and the technology of phase detection autofocus (PDAF) can then be coupled with it to improve the speed, and at times accuracy, of focusing.

PDAF sensors have the so-called phase detection (PD) pixels arranged across the whole sensor area. The phase information derived from the phase detection pixels can be used to determine the focal length, which in turn drives the lens to move to the position with the optimal focus, and that process is typically very fast if the phase information is accurate enough. The phase detection pixels are typically arranged periodically in the horizontal and vertical directions, across the entire sensor. After extracting the phase information from those pixels, they must be concealed or corrected. Otherwise, they could appear as a mesh of clustered defects across the image. It is, therefore, essential to have a phase detection pixel concealment (PPC) module in the image signal processor to maintain high image quality.

N. El-Yamany: "Robust Defect Pixel Detection and Correction for Bayer Imaging Systems," in: IS&T International Symposium on Electronic Imaging 2017, p. 46-51, discloses a method for identifying singlets and couplets of hot pixels, cold pixels or mixture of both types. Those pixels are not corrected early in the image processing pipeline, demosaicing and filtering operations will cause them to spread and appear as coloured clusters that are detrimental to image quality. The method operates on the raw data coming from the Bayer sensor. A defect pixel is identified if two conditions are met. In the first condition, it is checked whether the pixel is significantly different from its same-colour neighbours in the $S \times S$ Bayer window centred at that pixel. In the second condition, it is tested whether the local brightness difference in the pixel is significantly higher for hot pixels or lower for cold pixels than the smallest local brightness difference for each colour channel when the $3 \times 3$ Bayer window is centred at the pixel.

A detected defect pixel is replaced with the robust, detail-preserving estimate, which is determined by use of directional filters.

E. Chang: "Kernel-size selection for defect pixel identification and correction", in: Proc. SPIE 6502, Digital Photography III, 65020J, 20-02-2007, describes a bounding min-max filter with varying kernel sizes for defect pixel correction.

S. Wang, S. Yao, O. Faurie, and Z. Shi: "Adaptive defect correction and noise suppression module in the CIS image processing system", in: Proc. SPIE Int. Symposium on Photoelectronic Detection and Imaging, vol. 7384, p. 73842V-1-6, describes a spatial adaptive noise suppression algorithm which combines a defect pixel correction function for implementation in a CMOS image sensor chip. A centre weighted median filter is provided to correct defect pixels. Random noises are treated separately according to the detail level of their background.

A. Tanbakuchi, A. van der Sijde, B. Dillen, A. Theuwissen and W. de Haan: "Adaptive pixel defect correction", in: Proc. SPIE Sensors and Camera Systems for Scientific, Industrial and Digital Photography Applications IV, vol. 5017, pp. 360-370, 2003, presents a defect correction algorithm utilizing raw Bayer image data. If a pixel in an image is found to be defective, the neighbouring pixels provide the best information for interpolating the defective pixel. Directional derivates are used to correlate the nearest points to the defect colour plane.

M. Schoberi, J. Seiler, B. Kasper, S. Foessel and A. Kaup: "Sparsity-based detect pixel compensation for arbitrary camera raw images", in: IEEE International Conference on Acoustics, Speech and Signal Processing, pp. 1257-1260, 2011, discloses an algorithm for detecting defect pixels and interpolating the missing values for the defect pixels. Previously interpolated pixels are re-used.

US 2011/102624 A1 discloses a pixel defect correction device including a defect determining section determining whether a pixel of interest of an image, in which pixels each having a pixel value are arrayed in a two-dimensional manner, is a defect of the image; a gradient detecting section detecting a gradient or an edge in a processing region, which includes pixels with the pixel of interest in the middle, based on values of at least peripheral pixels around the pixel of interest which are included in the processing region; a correction value acquisition section selecting a pixel, which is used for acquisition of a correction value of the pixel of interest, according to the detected gradient or edge and acquiring the correction value from a value of the selected pixel; and a defective pixel replacing section replacing the value of the pixel of interest with the correction value when the pixel of interest is determined to be a defect.

J. Bednar et al.: "Alpha-trimmed means and their relationship to median filters", IEEE Transactions on Acoustics, Speech, and Signal Processing, vol. 32, no. 1, 1 February 1984, pages 145-153 explains the relationship between α-trimmed means and median filters. The $\alpha$-trimmed mean of a finite set of N numbers X is obtained by sorting X into ascending order, removing (trimming) a fixed fraction from the high and low ends of the sorted set, and computing the average of the remaining values. When applied to a sliding window of length, the $\alpha$-trimming process is called $\alpha$-trim filtering. For $\alpha = 0.5$, the $\alpha$-trimmed mean of a set is the median of the set and the filtering operation is called median filtering. Repeated application of a median filter to the output of a previous median filter of the same length eventually produces a signal which is invariant to median filtering. This final signal is called the root signal. Repeated application of the filter leads to convergence to the root signal.

US 2006/126127 A1 discloses a digital image sensor comprising an array of pixels and a processor. The array of pixels comprises a current pixel in a first colour plane that is configured to produce a current sensor value, a first plurality of pixels in the first colour plane that is configured to produce a first plurality of sensor values, and a second plurality of pixels in the second colour plane that is configured to produce a second plurality of sensor values. The processor is configured to generate a plurality of estimate values using the first plurality of sensor values and a plurality of intensity ratios associated with the second plurality of sensor values, and the processor is configured to determine whether the current pixel is defective using the plurality of estimate values and the current sensor value.

WO 2020/010638 A1 discloses a method and device for detecting a defective pixel in an image capable of solving problems of low applicability of defective pixel detection rules and poor detection performance. The method comprises: taking a first pixel in an image as a center, and selecting pixels within a preset region around the first pixel; inputting, to a neural network, a pixel value of the first pixel and pixel values of the pixels within the preset region to perform prediction, and obtaining a probability that the first pixel is a defective pixel; and if the probability is greater than a preset threshold, determining that the first pixel is a defective pixel. In an embodiment of the disclosed invention, a neural network is trained to obtain a neural network parameter, and then the neural network and the neural network parameter are used to perform detection and correction of a defective pixel.

KR 100690342 B1 discloses a method and an apparatus for discriminating a defective pixel in an image sensor. A pixel is identified as a defective pixel by comparing it to at least one or more pixel data among the same kind of pixels located around the target pixel. When the target pixel data is greater than the predetermined threshold value or greater than the homogenous pixel data to be compared, or smaller than a predetermined threshold value or more, the pixel is identified as a defective pixel. Further, the pixel can be judged as a defective pixel, when the pixel data is smaller than the value obtained by weighting the predetermined threshold compared with the homogenous pixel data or greater than the value obtained by weighting a predetermined threshold on the homogenous pixel data to which the target pixel data is compared. The target pixel data is smaller than the weighted value obtained by weighting the minimum and maximum threshold values.

US 2005/162531 A1 discloses a low-cost camera comprising a block for pixel correction. The raw image data is scanned for pixels that differ in a specific amount in intensity from the neighboring pixels.

US 2004/051798 A1 discloses a digital image system comprising a bad pixel correction algorithm. In case that the sensor value of the current pixel is outside of the range by a threshold amount that is calculated using one or more gradients, the current pixel is determined to be a defective pixel.

EP 2 419 879 B1 discloses a method of median thresholded denoising. The value of the current pixels compared to the median of the surrounding pixels may be the same colour. If the current pixel deviates from the median more than the threshold value, then the current pixel is replaced by the median value. This is provided to exterminate excessive noise and is used for any pixel deviating from the value of the surrounding pixel.

An object of the present invention is to provide an improved method and image processor unit which provides a robust scheme for detecting defect pixels.

The object is achieved by the method comprising the features of claim 1, the image processor unit comprising the features of claim 12 and the computer program according to claim 13. Preferred embodiments are disclosed in the dependent claims. It is proposed to carry out the steps of:

a) Determining the respective local brightness difference between a selected pixel and a set of pixels located adjacent to the respective pixel and assigned to the same colour of the respective pixel; and
b) Identifying the selected pixel as a defect pixel when the local brightness difference for the selected pixel exceeds an upper threshold value or is less than the lower threshold value, and when the local brightness difference for the selected pixel exceeds a weighted maximum local brightness difference determined for the set of pixels located adjacent to and the same colour as the selected pixel or is less
than a weighted minimum local brightness difference determined for the set of pixels located adjacent to and the same colour as the respective pixel.

For identifying a selected pixel as a defect pixel, two detection conditions are combined. The conditions are, in principle, independent from the colour filter array used by the image sensor for providing the pixel array. Different types of defects can be identified by a combination of the conditions, which can be easily tuned by a given threshold value and a weighting factor.

By comparing the local brightness difference for the selected pixel with the given threshold, it is checked whether the selected pixel is significantly different from its same-coloured neighbours in a small window, which includes the selected pixel and the set of surrounding pixels. The selected pixel can be centred in the small window, when the method is carried out in the pixel array having the pattern of a respective colour filter array, i.e. before the step of demosaicing.

With the second condition, the local brightness for the selected pixel is compared against the local brightness differences determined for the neighbouring pixels located adjacent to the selected pixel. Preferably, it is checked whether the local brightness difference in the selected pixel is significantly different from the local brightness differences of the same-colour neighbours in the small window centred at the selected pixel. The maximum local brightness difference and minimum local brightness difference is not necessarily the absolute maximum or minimum value of a set of local brightness differences. This is understood as one selected maximum / minimum value, e.g. the first (absolute) or preferably the second or even third, fourth, ... maximum / minimum value of a set, which corresponds to excluding the absolute maximum / minimum values as outliners from the set of values expressing the local brightness difference. Thus, also a local maximum / minimum value or an adjusted maximum / minimum value is included in the meaning of maximum / minimum local brightness difference according to the present invention.

The second condition allows to differentiate between a real defective pixel and a small image detail.

The combination of the two conditions provides a robust scheme for identifying the selected pixels as defect, which can be easily carried out on an image data stream comprising pixel data of arrays of pixels with low computational effort and reliable results. The method can be used for various colour filter arrays, such as standard Bayer, Quad Bayer, RGBW, Nonacell and Hexadeca Bayer colour filter array patterns. It is possible to easily identify singlets or couplets of hot defects, cold defects or a mixture of both types of defects. The method is also based to identify higher-order defects.

For determining the local brightness difference for a selected pixel in step a), an average value for the set of pixels located adjacent to the respective pixel can be calculated. The local brightness difference for the selected pixel can be then calculated as a difference between the value of the selected pixel and the calculated average value of the set of adjacent pixels.

The adjacent pixels can be located directly adjacent to the selected pixel. It is also possible to consider adjacent pixels which are located close to the selected pixels with pixels in between the selected pixel and the adjacent pixel in a pixel array.

The set of adjacent pixels used for determining the respective local brightness difference for the selected pixel are selected from only those adjacent pixels which are assigned to the same colour as the selected pixel. The average value of the adjacent pixels of the set of pixels is calculated to determine the local brightness difference as the difference between the value of the selected pixel and the calculated average value for the set of adjacent pixels.

Thus, each selected pixel can be assigned to a respective local brightness difference value.

The average value can be calculated as mean value, alpha-trimmed mean value or medium value for a set of pixels surrounding the selected pixel and being assigned to the same colour as the selected pixel.

For determining the alpha-trimmed mean value, the pixel values are sorted by size on the top and bottom $\alpha$ portion of the number of pixel values that are excluded from the mean. For example, a 2-$\alpha$-trimmed mean filter deletes two pixel values for calculating the mean value, namely the lowest and highest values (i.e. brightness levels for the respective colour).

Other methods for calculating the average value are also applicable, like midpoint filter or the like.

The set of pixels used in step a) of determining the local brightness difference for the selected pixel can be located in a window of pre-determined size, preferably a $4 \times 4$, $5 \times 5$, $6 \times 6$ or $8 \times 8$ window, wherein the set of pixels is assigned to the same colour of the selected pixel. The selected pixel is preferably located in the centre of this window.

By use of a window including the selected pixel, wherein the frame of the window surrounds the selected pixel, pixels of the same colour within the window are selected for the set of adjacent pixels.

The first condition can be checked to identify hot or cold pixels by determining the maximum local brightness difference of a set of pixels located adjacent to and the same colour as the selected pixel in a window of a pre-determined size and identifying the selected pixel as defective hot pixel when the local brightness difference exceeds the weighted maximum local brightness difference, or determining the minimum local brightness difference of a set of pixels located adjacent to and the same colour as the selected pixel in the window of a pre-determined size and identifying the selected pixel as a defective cold pixel when the local brightness difference is less than the weighted minimum local brightness difference.

An improved detection result for identifying defect pixels can be achieved by considering the second maximum local difference or the second minimum local difference instead of the maximum or minimum values of the local difference. It appears that by considering not the maximum local difference value, but the lower second maximum local difference value, or for the minimum local difference value not the minimum, but the second minimum value, outliers of the local difference values are excluded. This can be compared to considering the median value for an average value instead of the mean value.

More preferably, the lower order maximum value of the local difference, e.g. the second maximum local brightness difference, is determined from the set of the positive values of the local brightness difference. Similar, the lower order minimum value of the local difference, e.g. the second minimum local brightness difference, is determined from the set of the negative values of the local brightness difference.

Another option is to determine the maximum value from the absolute values of the local brightness differences of the set of pixels located adjacent to the selected pixel. Then, the consideration of the minimum value for the second condition is not of interest.

The maximum local difference or the minimum local difference in the meaning of the present invention also include second, third, fourth and so on maximum or minimum local difference values when excluding outlier values. The upper threshold value and/or lower threshold value used for identifying the selected pixel as a defective pixel can be pre-determined and stored in a memory for applying to the method. Alternatively, the upper and lower threshold values can be adapted as required to improve the final image quality. Preferably, the upper and/or lower threshold value can be adapted by use of a neural network.

The same applies for the weighting factors considered for the minimum and maximum local brightness difference, which can also be pre-set as a fixed value or adapted as a variable to improve the image quality. Preferably, the weighting factors considered for the minimum and maximum local brightness difference are adaptively learned and improved by use of a neural network to provide a high final image quality. The weighting factors can be set as one value for the maximum local brightness difference and the minimum local brightness difference. Optionally, each of the maximum local brightness difference and minimum of the local brightness difference is assigned to a respective weighting factor.

The step a) of determining the respective local brightness difference for a selected pixel and step b) of identifying the selected pixel as a defect pixel can be carried out repeatedly by selecting pixels of the pixel array provided by the image camera for an image and carrying out the method for each selected pixel. Alternatively, not each pixel of the pixel array can be selected when repeating the method but a variety of pixels of the pixel array, for example, only pixels of a specific selected colour within the pixel array.

After identifying a pixel as defect, the image data comprising the pixel arrays can be further processed by correcting the pixels, which are identified as defect.

The image processor unit is arranged for processing image data by carrying out the steps of the above-described method. The image processor unit can be a hardware unit, like an FPGA or suitably programed microprocessor or data signal processor.

The method can be easily carried out by use of computer program comprising instructions which, when the program is executed by a processing unit, cause the processing unit to carry out the steps of the afore-mentioned method.

The invention is explained by an example in the enclosed drawings. It shows:

Figure 1 - block diagram of the method for processing image data;

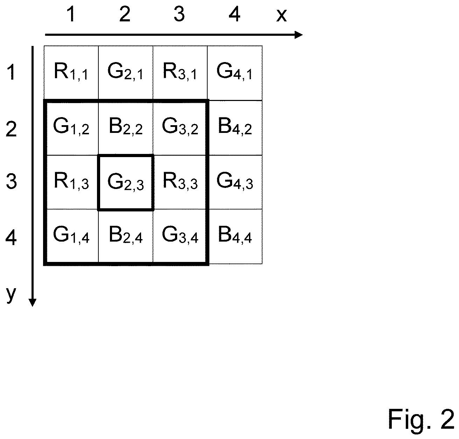

Figure 2 - exemplary pixel array for a Bayer colour filter array pattern with a selected pixel and a window of adjacent pixels;
Figure 3 - block diagram of an exemplary method for correcting pixels identified as defect.

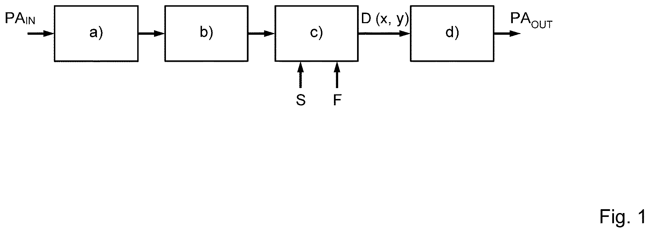

Figure 1 shows a block diagram of the method and the functional units of the image processor unit for processing image data provided by an image sensor, wherein the image data comprising an array of pixel $PA_{IN}$, which is used as input for the further steps.

The step a) determines the respective local brightness difference between a selected pixel of the pixel array $PA_{IN}$ and a set of pixels located adjacent to the respective pixel and assigned to the same colour of the respective pixel.

The local brightness difference LBD (x, y) for the position x, y of the selected pixel in the pixel array can be determined as the difference between the value of the selected pixel P (x, y) and the robust estimate p_est (x, y) of the selected pixel P (x, y) as follows:

$$\text{LBD} (x, y) = P (x, y) - p\_est (x, y).$$

The robust estimate p_est (x, y) of the selected pixel P (x, y) can be determined by use of the pixel values of a set of pixels, which are located adjacent to the selected pixel P (x, y). For example, the mean value or the median value of all pixels of the same colour as the selected pixel, which are located within a pre-determined window, said window includes the selected pixel P (x, y), can be calculated for the robust estimate p_est (x, y). Preferably, the selected pixel P (x, y) is located in the centre of the window.

In order to detect or identify couplets of defects, the robust estimate p_est (x, y) should be robust to the presence of couplets on the raw window centred at the selected pixel P (x, y). One possibility is to calculate p_est (x, y) as the $\alpha$-trimmed mean (with $\alpha = 2$) of the same-colour neighbours in the raw window.

This can be better understood by an exemplary array shown in Figure 1 for a Bayer colour filter array pattern. For example, the selected pixel P (x, y) is G (2, 3). The small window 3 × 3 around this selected pixel G (2, 3) is used to select pixels of the same value for the set of adjacent pixels. In this exemplary case, the pixels G (1, 2), G (3, 2), G (1, 4) and G (3, 4) are selected for the set of adjacent pixels.

The average value of this set of adjacent pixels G (1, 2), G (3, 2), G (1, 4) and G (3, 4) is calculated and the resulting average value is used as the robust estimate p_est (x, y).

For the 2-α-trimmed mean, the highest and lowest value of the set of e.g. four pixels is disregarded and the mean value is calculated from the (with e.g. four pixels remaining two) remaining intermediate pixel values of the set of (e.g. four) adjacent pixels.

Similarly, a window of a specific size is centred around the selected blue B (x, y) pixel for a selected red R (x, y) pixel. The size of the window used for the selected pixel with a respective colour can be chosen varying in dependence of the respective colour. The size of the window can be chosen for example such that it includes at least three adjacent pixels of the same colour to be assigned for the set of adjacent pixels for the selected pixel of a specific colour. The size of the window can be selected in dependence on the respective different colour filter array pattern and/or the location of the specific selected pixel P (x, y). The aim is to determine the robust estimate of the selected pixel value P (x, y) by use of a sufficient number of adjacent pixels of the same colour.

One option to safeguard a sufficient number of adjacent pixels, a local demosaicing process can be additional carried out, so that the small window around the selected pixel P (x, y) can be chosen with a sufficiently high number of pixel values of the same colour as the colour of the selected pixel.

In step b) of Figure 1, the selected pixel Py(x, y) is identified as a defect pixel when the local brightness difference LBD (x, y) for the selected pixel P (x, y) exceeds an upper threshold value S_hot and/or is lower than the lower threshold value S_cold. This can be expressed by the following equation:

For hot pixels:     LBD (x, y) > S_hot
For cold pixels:    LBD (x, y) < S_cold.

Alternatively, one common threshold value S can be set for the upper and lower threshold value, when comparing the absolute value of the local brightness difference with this common upper/lower threshold value S. This can be expressed by the following equation:

$$|LBD\ (x,\ y)| > S.$$

The condition that the local brightness difference is greater or lower than the threshold value S or upper/lower threshold S_hot and S_cold includes the condition that the local brightness difference LBD (x, y) is also equal to the threshold value S, S_hot, S_cold.

By use of a weighted value and the common threshold value, it is checked within one step whether the local brightness difference LBD (x, y) exceeds an upper threshold value S and is lower than the lower threshold value S.

Further, in step b) the selected pixel P (x, y) is identified as a defect pixel in case that also the second condition applies, namely that the local brightness difference LBD (x, y) at the selected pixel P (x, y) is significantly different from the local brightness differences LBD (i, j) of the adjacent pixels. This allows to differentiate between real defective pixels and small image details.

The local brightness difference is therefore calculated not only for the selected pixel P (x, y) but also for the pixels P (i, j), which are located adjacent, i.e. as direct or indirect neighbours of the selected pixel P (x, y). As for calculating the robust estimate p_est (x, y), the pixels of the set of adjacent pixels and their respective local brightness difference LBD (x, y) are considered to determine a weighted maximum local brightness local difference LBD (i, j) and the weighted minimum local brightness difference LBD (i, j). This can be expressed by the following formula:

For hot pixels:     LBD (x, y) > F_hot × max (LBD (i, j) ∀ (i, j) ε Ω)
For cold pixels:    LBD (x, y) < F_hot × min (LBD (i, j) ∀ (i, j) ε Ω).

Ω is the collection of the same-colour pixels in the pixel array within the window centred at the selected pixel P (x, y). LBD (x, y) is the local brightness difference determined for the selected pixel P (x, y). F_hot and F_cold are weighting factors which would have the same or different values. The positions i, j are related to the specific pixel positions x, y in the pixel array window related to adjacent pixel of the same colour as the selected pixel P (x, y).

In order to be robust to couplets, Ω should include a robustness strategy, for example by excluding same-colour pixels with the highest/smallest LBD values in the window. This can be achieved by consideration of the second maximum and the second minimum value of the set of local brightness differences LBD (i, j) for the set of adjacent pixels. This can be expressed by the equations:

For hot pixels:  LBD (x, y) > F_hot × 2nd max (LBD_positive (i, j) $\forall$ (i, j) $\varepsilon$ $\Omega$)
For cold pixels:  LBD (x, y) < F_hot × 2nd min (LBD_negative $\forall$ (i, j) (i, j) $\varepsilon$ $\Omega$).

LBD_positive (i, j) denotes the positive-valued local brightness differences in the set $\Omega$ at the respective pixel position i, j in the pixel matrix. LBD_negative (i, j) denotes the negative-valued local brightness differences in the set $\Omega$ at the respective pixel position i, j in the pixel matrix.

The upper and lower threshold value S, S_hot and S_cold and the weighting factors F_hot and F_cold can be physically stored in a memory or varied. They are input into step c), which includes a neural network for adapting the threshold values S and weighting factors F.

Using a small weighting factor F, F_hot and F_cold would result in more false positives. Using a big value for the weighting factor F, F_hot and F_cold would result in less fewer positives.

Preferably, S can be selected from the group of [0,2 ^ NBits-1] and the weighting factor F $\geq$ 1, where NBits is the bit depth of the raw data.

In step c), the threshold values, S, S_hot, S_cold and weighting factors F, F_hot, F_cold can be tuned together to achieve the best trade between defect detection and detail preservation, i.e. image quality. The adaption can be performed by use of a learning-based framework, i.e. neural network achieving an improved defect detection rate close to 100 % and reduced false positive rate, preferably close to 0%.

The neural network can be learned by the goal to achieve the optimized image quality.

The result of step b) is an identification of defect pixels D (x, y) that can be provided by a simple list of x, y positions identifying the pixel in this location as defect. Additional information on the kind of defect (hot pixel, cold pixel) can be included optionally.

In step d), a step of defect pixel correction can be carried out based on the incoming pixel array PA$_{IN}$ and the pixels or pixel locations D (x, y) identified as defect.

Defect pixel correction is known in the prior art. A suitable method for defect pixel correction can be selected to achieve a corrected pixel array at the output PA$_{OUT}$.

Preferably, defect pixel correction seeks to preserve the image details and hence, when possible, relies on using directional correction and limiting the information used in the correction to a small neighbourhood.

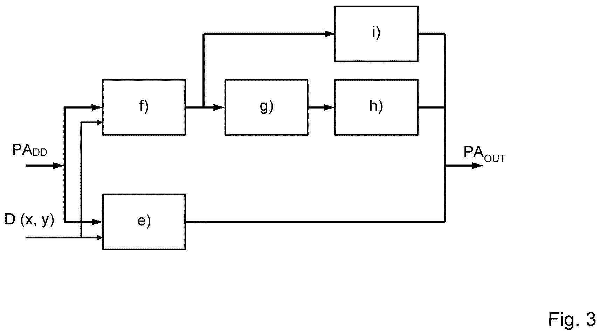

Figure 3 shows an exemplary preferred embodiment for defect pixel correction using step e) of closest-neighbours correction to correct the pixel via interpolation of nearest same-colour neighbours.

In a separate path, the steps f), g), h), and i) are performed for executing a directional correction h) and a non-directional correction i), which are both based on a first step f) of non-directional pre-correction. Before carrying step h) of directional correction, a directional filtering is carried out in step g).

The defect correction mechanism decides which of the three operations is utilized for the correction depending on the colour filter array pattern and the colour channel arrangement in the colour filter array data. Specifically, when a given colour channel in the colour filter array pattern exhibits symmetry, thus facilitating directional estimation and correction, the default correction scheme can follow the three-step procedure with the steps f) of non-directional pre-correction, g) of directional filtering and h) of directional correction, or alternatively, i) of non-directional correction.

In step f) "non-directional pre-correction", a robust estimate is calculated for all the identified defect pixels in the raw image data centred at the pixel being corrected, and all non-defect pixels are left intact. The purpose of this pre-correction (preprocessing) in step f) is to provide an intermediate clean estimate of the raw image data around the pixel being corrected, thus facilitating robust direction identification in that pixel position. The robust estimate p_est (x, y), which is defined as stated above, can be used in this step.

The step g) of directional filtering serves to identify the feature direction in the pixel position being corrected. Therefore, directional filtering is performed in the pixel position by convolving the pixel along with its same-colour neighbours with a set of directional filters. Based on the maximum absolute response of the filter set, the feature direction is identified.

The number and size and coefficients depend on several factors:

1. The number of directions planned to be identified and supported in the correction scheme;
2. The size of the raw support centred at the pixel;
3. The colour filter array channel arrangement;
4. The type of the filters, e.g. gradient-based or otherwise.

Once a feature direction in the pixel being corrected is identified, the pixel can be corrected by interpolating clean, same-colour pixels along the identified direction in the step h) of directional correction. In order to reduce or eliminate the possibility of correction artefacts, directional correction is typically limited to a small neighbourhood of the pixel.

If no feature direction is identified, e.g. in various smooth regions, then a non-directional correction can be pursued by replacing the defect pixel with a robust estimate of it, e.g. by p_est (x, y). The step is identified as step i) in Figure 3.

When a given colour channel in the filter array pattern does not exhibit symmetry, such as R, G, or B channels in the RGBW colour filter array pattern or R and G and G channels in the Quad Bayer colour filter array pattern, then the defect correction scheme can rely solely on the step e) of closes-neighbours correction.

In the step e), a robust estimate is used to correct the defective pixel. One possibility for such an estimate is, for example, the $\alpha$-trimmed mean of the same-colour pixels in the neighbourhood of the pixel being corrected. Another possibility is some weighted average of those same-colour neighbours.

Of course, directional or content-aware correction would give a better image quality than non-directional correction. It is, therefore, preferred that when interpolating closest neighbours, the interpolation strategy attempts as much as possible to identify directions or takes into account the content in the raw image data in the pixel P (x, y) being corrected.

The step d) in Figure 1 of correcting pixels identified as defect can be used with various colour filter array patterns, such as Standard Bayer, Quad Bayer, RGBW and HexaDeca Bayer colour filter array patterns. The definition of the robust pre-correction, directional filters, directional/non-directional correction (interpolation) and closest-neighbours correction may take different flavours. They can be changed from fixed global definitions to local ones, depending on the afforded complexity and the desired image quality.

The method for processing image data according to the present invention can correct singlets and/or couplets of hot defects, cold defects or a mixture of both types. With a proper adjustment, e.g. the size of the raw image data, it can handle higher-order defects.

**Claims**

1. Method for processing image data provided by an image sensor, the image data comprising an array of pixel, **characterized by** the steps of:

   a) Determining the respective local brightness difference between a selected pixel and a set of pixels located adjacent to the selected pixel and
   assigned to the same colour as the respective pixel; and
   b) Identifying the selected pixel as a defect pixel when the local brightness difference for the selected pixel exceeds an upper threshold value or is less than an lower threshold value, and when the local brightness difference for the selected pixel exceeds a weighted maximum local brightness difference determined for the set of pixels located adjacent to and the same colour as the selected pixel or is less than a weighted minimum local brightness difference determined for the set of pixels located adjacent to and the same colour as the selected pixel.

2. Method according to claim 1 **characterised by** calculating an average value for the set of pixels located adjacent to the selected pixel in the step a) and determining the local brightness difference for the selected pixel by calculating the difference between the value of the selected pixel and the calculated average value of the set of adjacent pixels.

3. Method according to claim 2, wherein the average value is a mean value, alpha-trimmed mean value or median value of the set of pixels surrounding the selected pixel and being assigned to the same color as the selected pixel.

4. Method according to one of claims 1 to 3, **characterized in, that** the set of pixels used in step a) of determining the local brightness difference for a selected pixel are located in a window of a predetermined size, preferably a 4x4, 5x5, 6x6 or 8x8 window, wherein the set of pixels are assigned to the same colour as the selected pixel, and wherein the selected pixel, for which the local brightness difference is determined, is located in the centre of the window.

5. Method according to one of claims 1 to 3, **characterized by**

   - Determining the maximum local brightness difference of a set of pixels located adjacent to and the same colour as

the selected pixel in a window of predetermined size, and
- Identifying the selected pixel as a defective hot pixel when the local brightness difference exceeds the weighted maximum local brightness difference.

6. Method according to one of claims 1 to 3 or 5, **characterized by**:

   - Determining the minimum local brightness difference of a set of pixels located adjacent to and the same color as the selected pixel in a window of predetermined size, and
   - Identifying the selected pixel as a defective cold pixel when the local brightness difference is less than the weighted minimum local brightness difference.

7. Method according to one of claims 1 to 3, **characterized by**

   - Determining a
   second maximum local brightness difference, which is lower than the maximum value of the local brightness difference, instead of the maximum value of the local brightness difference for a set of pixels located adjacent to and the same color as the selected pixel in a window of predetermined size, and
   - Identifying the selected pixel as a defective hot pixel when the local brightness difference exceeds the weighted second maximum local brightness difference ,
   or
   - Determining a
   second minimum local brightness difference, which is larger than the maximum value of the local brightness difference, instead of the minimum value of the local brightness difference for the set of pixels located adjacent to and the same color as the selected pixel in a window of predetermine size, and
   - Identifying the selected pixel as a defective cold pixel when the local brightness difference is less than the weighted second minimum local
   brightness difference.

8. Method according to claim 7, **characterized in** determining the second maximum local brightness difference instead of the maximum value of the local brightness difference for a set of pixels located adjacent to and the same color as the selected pixel in said window of predetermined size, from local brightness difference values in the set having a positive value, or determining the second minimum local brightness difference instead of the minimum value of the local brightness difference for a set of pixels located adjacent to and the same color as the selected pixel in said window of predetermined size, from local brightness difference values in the set having a negative value.

9. Method according to one of the preceding claims, **characterized by** adapting the upper threshold value and/or lower threshold value used for identifying a selected pixel as a defective pixel or/and the weighting factors for the minimum and maximum local brightness difference by use of a neural network.

10. Method according to one of the preceding claims, wherein the step a) of determining the local brightness difference for a selected pixel and step b) of identifying the selected pixel as defect pixel is carried out repeatedly by selecting pixels of a pixel array provided by the image camera for an image and carrying out the method for each selected pixel.

11. Method according to one of the preceding claims, **characterised by** correcting pixels identified as defect.

12. Image processor unit for processing image data provided by an image sensor, wherein the image data comprising an array of pixel, **characterized in that** the image processing unit is arranged to carry out the steps of the method according to one of claims 1 to 11.

13. Computer program comprising instructions which, when the program is executed by a processing unit, causes the processing unit to carry out the steps of the method of one of claims 1 to 11.

**Patentansprüche**

1. Verfahren zur Verarbeitung von Bilddaten, die von einem Bildsensor bereitgestellt werden, wobei die Bilddaten ein Pixelarray umfassen, **gekennzeichnet durch** die folgenden Schritte:

a) Bestimmen des jeweiligen lokalen Helligkeitsunterschieds zwischen einem ausgewählten Pixel und einer Menge von Pixeln, die benachbart zu dem ausgewählten Pixel angeordnet sind und derselben Farbe wie das jeweilige Pixel zugeordnet sind; und

b) Identifizieren des ausgewählten Pixels als defektes Pixel, wenn der lokale Helligkeitsunterschied für das ausgewählte Pixel einen oberen Schwellenwert überschreitet oder kleiner als ein unterer Schwellenwert ist, und wenn der lokale Helligkeitsunterschied für das ausgewählte Pixel einen gewichteten maximalen lokalen Helligkeitsunterschied, der für die Menge von Pixeln, die benachbart zu dem ausgewählten Pixel angeordnet sind und derselben Farbe wie dieses zugeordnet sind, bestimmt ist, überschreitet oder kleiner als ein gewichteter minimaler lokaler Helligkeitsunterschied ist, der für die Menge von Pixeln, die benachbart zu dem ausgewählten Pixel angeordnet sind und derselben Farbe wie dieses zugeordnet sind, bestimmt ist.

2.  Verfahren nach Anspruch 1, **gekennzeichnet durch** Berechnen eines Durchschnittswerts für die Menge von Pixeln in Schritt a), die benachbart zu dem ausgewählten Pixel angeordnet sind, und Bestimmen des lokalen Helligkeitsunterschieds für das ausgewählte Pixel durch Berechnen der Differenz zwischen dem Wert des ausgewählten Pixels und dem berechneten Durchschnittswert der Menge von benachbarten Pixeln.

3.  Verfahren nach Anspruch 2, wobei der Durchschnittswert ein Mittelwert, ein Alphagetrimmter Mittelwert oder ein Medianwert der Menge von Pixeln ist, die das ausgewählte Pixel umgeben und derselben Farbe wie das jeweilige Pixel zugeordnet sind.

4.  Verfahren nach einem der Ansprüche 1 bis 3, **dadurch gekennzeichnet, dass** die im Schritt a) des Bestimmens des lokalen Helligkeitsunterschieds für ein ausgewähltes Pixel verwendete Menge von Pixeln in einem Fenster einer vorgegebenen Größe, vorzugsweise einem 4x4-, 5x5-, 6x6- oder 8x8-Fenster, angeordnet wird, wobei die Menge von Pixeln derselben Farbe wie das ausgewählte Pixel zugeordnet ist, und wobei das ausgewählte Pixel, für das der lokale Helligkeitsunterschied bestimmt ist, in der Mitte des Fensters angeordnet ist.

5.  Verfahren nach einem der Ansprüche 1 bis 3, **gekennzeichnet durch**

    - Bestimmen des maximalen lokalen Helligkeitsunterschieds einer Menge von Pixeln, die benachbart zu dem ausgewählten Pixel angeordnet sind und derselben Farbe wie dieses zugeordnet sind, in einem Fenster vorgegebener Größe; und
    - Identifizieren des ausgewählten Pixels als defektes Hot-Pixel, wenn der lokale Helligkeitsunterschied den gewichteten maximalen lokalen Helligkeitsunterschied überschreitet.

6.  Verfahren nach einem der Ansprüche 1 bis 3 oder 5, **gekennzeichnet durch**

    - Bestimmen des minimalen lokalen Helligkeitsunterschieds einer Menge von Pixeln, die benachbart zu dem ausgewählten Pixel angeordnet sind und derselben Farbe wie dieses zugeordnet sind, in einem Fenster vorgegebener Größe; und
    - Identifizieren des ausgewählten Pixels als defektes Hot-Pixel, wenn der lokale Helligkeitsunterschied kleiner als der gewichtete minimale lokale Helligkeitsunterschied ist.

7.  Verfahren nach einem der Ansprüche 1 bis 3, **gekennzeichnet durch**

    - Bestimmen eines zweiten maximalen lokalen Helligkeitsunterschieds, der niedriger ist als der maximale Wert des lokalen Helligkeitsunterschieds, anstelle des maximalen Werts des lokalen Helligkeitsunterschieds für eine Menge von Pixeln, die benachbart zu dem ausgewählten Pixel angeordnet sind und derselben Farbe wie dieses zugeordnet sind, in einem Fenster vorgegebener Größe; und
    - Identifizieren des ausgewählten Pixels als defektes Hot-Pixel, wenn der lokale Helligkeitsunterschied den gewichteten zweiten maximalen lokalen Helligkeitsunterschied überschreitet,
    oder
    - Bestimmen eines zweiten minimalen lokalen Helligkeitsunterschieds, der größer ist als der maximale Wert des lokalen Helligkeitsunterschieds, anstelle des minimalen Werts des lokalen Helligkeitsunterschieds für die Menge von Pixeln, die benachbart zu dem ausgewählten Pixel angeordnet sind und derselben Farbe wie dieses zugeordnet sind, in einem Fenster vorgegebener Größe; und
    - Identifizieren des ausgewählten Pixels als defektes Cold-Pixel, wenn der lokale Helligkeitsunterschied kleiner als der gewichtete zweite minimale lokale Helligkeitsunterschied ist.

**8.** Verfahren nach Anspruch 7, **gekennzeichnet durch** Bestimmen des zweiten maximalen lokalen Helligkeitsunterschieds anstelle des maximalen Werts des lokalen Helligkeitsunterschieds für eine Menge von Pixeln, die benachbart zu dem ausgewählten Pixel angeordnet sind und derselben Farbe wie dieses zugeordnet sind, in dem Fenster vorgegebener Größe aus lokalen Helligkeitsunterschiedswerten in der Menge mit einem positiven Wert, oder Bestimmen des zweiten minimalen lokalen Helligkeitsunterschieds anstelle des minimalen Werts des lokalen Helligkeitsunterschieds für eine Menge von Pixeln, die benachbart zu dem ausgewählten Pixel angeordnet sind und derselben Farbe wie dieses zugeordnet sind, in dem Fenster vorgegebener Größe aus lokalen Helligkeitsunterschiedswerten in der Menge mit einem negativen Wert.

**9.** Verfahren nach einem der vorhergehenden Ansprüche, **gekennzeichnet durch** das Anpassen des zum Identifizieren eines ausgewählten Pixels als defektes Pixel verwendeten oberen Schwellwertes und/oder unteren Schwellwertes und/oder der Gewichtungsfaktoren für den minimalen und maximalen lokalen Helligkeitsunterschied unter Verwendung eines neuronalen Netzes.

**10.** Verfahren nach einem der vorhergehenden Ansprüche, wobei der Schritt a) des Bestimmens des lokalen Helligkeitsunterschieds für einen ausgewählten Pixel und der Schritt b) des Identifizierens des ausgewählten Pixels als defektes Pixel wiederholt durchgeführt werden, indem Pixel eines Pixelarrays, das von der Bildkamera für ein Bild bereitgestellt ist, ausgewählt werden und das Verfahren für jedes ausgewählte Pixel durchgeführt wird.

**11.** Verfahren nach einem der vorhergehenden Ansprüche, **gekennzeichnet durch** Korrigieren von als defekt identifizierten Pixeln.

**12.** Bildverarbeitungseinheit zur Verarbeitung von Bilddaten, die von einem Bildsensor bereitgestellt sind, wobei die Bilddaten ein Pixelarray umfassen, **dadurch gekennzeichnet, dass** die Bildverarbeitungseinheit dazu eingerichtet ist, die Schritte des Verfahrens nach einem der Ansprüche 1 bis 11 durchzuführen.

**13.** Computerprogramm mit Anweisungen, die beim Ausführen des Programms durch eine Verarbeitungseinheit die Verarbeitungseinheit dazu veranlassen, die Schritte des Verfahrens nach einem der Ansprüche 1 bis 11 durchzuführen.

**Revendications**

**1.** Procédé de traitement de données d'image fournies par un capteur d'image, les données d'image comprenant un tableau de pixels, **caractérisé en ce qu'**il comprend les étapes suivantes :

a) Déterminer une différence de luminosité locale respective entre un pixel sélectionné et un ensemble de pixels adjacents du pixel sélectionné et attribués à la même couleur que le pixel respectif ; et
b) Identifier le pixel sélectionné comme pixel défectueux lorsque la différence de luminosité locale pour le pixel sélectionné est supérieure à une valeur de seuil supérieure ou est inférieure à une valeur de seuil inférieure, et lorsque la différence de luminosité locale pour le pixel sélectionné est supérieure à une différence de luminosité locale maximale pondérée déterminée pour l'ensemble de pixels adjacents du pixel sélectionné et de la même couleur que celui-ci ou est inférieure à une différence de luminosité locale minimale pondérée déterminée pour l'ensemble de pixels adjacents du pixel sélectionné et de la même couleur que celui-ci.

**2.** Procédé selon la revendication 1, **caractérisé par** : calculer une valeur moyenne pour l'ensemble de pixels adjacents du pixel sélectionné à l'étape a) et déterminer la différence de luminosité locale pour le pixel sélectionné en calculant la différence entre la valeur du pixel sélectionné et la valeur moyenne calculée de l'ensemble de pixels adjacents.

**3.** Procédé selon la revendication 2, dans lequel la valeur moyenne est une valeur moyenne, une valeur moyenne alpha-corrigée ou une valeur médiane de l'ensemble de pixels entourant le pixel sélectionné et étant attribuée à la même couleur que le pixel sélectionné.

**4.** Procédé selon l'une des revendications 1 à 3, **caractérisé en ce que** l'ensemble de pixels utilisés à l'étape a) de détermination de la différence de luminosité locale pour un pixel sélectionné sont situés dans une fenêtre d'une taille prédéterminée, de préférence une fenêtre de $4 \times 4$, $5 \times 5$, $6 \times 6$ ou $8 \times 8$, dans lequel l'ensemble de pixels sont attribués à la même couleur que le pixel sélectionné, et dans lequel le pixel sélectionné, pour lequel est déterminée la différence de luminosité locale est situé au centre de la fenêtre.

**5.** Procédé selon l'une des revendications 1 à 3, **caractérisé par** :

- Déterminer une différence de luminosité locale maximale d'un ensemble de pixels adjacents du pixel sélectionné et de la même couleur que celui-ci dans une fenêtre de taille prédéterminée, et
- Identifier le pixel sélectionné comme pixel chaud défectueux lorsque la différence de luminosité locale est supérieure à la différence de luminosité locale maximale pondérée.

**6.** Procédé selon l'une des revendications 1 à 3 ou 5, **caractérisé par** :

- Déterminer une différence de luminosité locale minimale d'un ensemble de pixels adjacents du pixel sélectionné et de la même couleur que celui-ci dans une fenêtre de taille prédéterminée, et
- Identifier le pixel sélectionné comme pixel froid défectueux lorsque la différence de luminosité locale est inférieure à la différence de luminosité locale minimale pondérée.

**7.** Procédé selon l'une des revendications 1 à 3, **caractérisé par** :

- Déterminer une seconde différence de luminosité locale maximale, qui est inférieure à la valeur maximale de la différence de luminosité locale, au lieu de la valeur maximale de la différence de luminosité locale pour un ensemble de pixels adjacents du pixel sélectionné et de la même couleur que celui-ci dans une fenêtre de taille prédéterminée, et
- Identifier le pixel sélectionné comme pixel chaud défectueux lorsque la différence de luminosité locale est supérieure à la différence de luminosité locale maximale pondérée,
ou
- Déterminer une seconde différence de luminosité locale minimale, qui est supérieure à la valeur maximale de la différence de luminosité locale, au lieu de la valeur minimale de la différence de luminosité locale pour l'ensemble de pixels adjacents du pixel sélectionné et de la même couleur que celui-ci dans une fenêtre de taille prédéterminée, et
- Identifier le pixel sélectionné comme pixel froid défectueux lorsque la différence de luminosité locale est inférieure à la seconde différence de luminosité locale minimale pondérée.

**8.** Procédé selon la revendication 7, **caractérisé par** : déterminer la seconde différence de luminosité locale maximale, au lieu de la valeur maximale de la différence de luminosité locale pour un ensemble de pixels adjacents du pixel sélectionné et de la même couleur que celui-ci dans ladite fenêtre de taille prédéterminée, à partir de valeurs de différence de luminosité locale dans l'ensemble ayant une valeur positive, ou déterminer la seconde différence de luminosité locale minimale, au lieu de la valeur minimale de la différence de luminosité locale pour un ensemble de pixels adjacents du pixel sélectionné et de la même couleur que celui-ci dans ladite fenêtre de taille prédéterminée, à partir de valeurs de différence de luminosité locale dans l'ensemble ayant une valeur .

**9.** Procédé selon l'une des revendications précédentes, **caractérisé par** : adapter la valeur de seuil supérieure et/ou la valeur de seuil inférieure utilisée(s) pour identifier un pixel sélectionné comme pixel défectueux ou/et facteurs de pondération de la différence de luminosités locales minimale et maximale à l'aide d'un réseau de neurones.

**10.** Procédé selon l'une des revendications précédentes, dans lequel l'étape a) de détermination de la différence de luminosité locale pour un pixel sélectionné et l'étape b) d'identification du pixel sélectionné comme pixel défectueux sont exécutées de manière répétée en sélectionnant des pixels d'un tableau de pixels fourni par la caméra d'image pour une image et en exécutant le procédé pour chaque pixel sélectionné.

**11.** Procédé selon l'une des revendications précédentes, **caractérisé par** la correction des pixels identifiés comme défectueux.

**12.** Unité de traitement d'images pour le traitement de données d'image fournies par un capteur d'image, dans laquelle les données d'image comprennent un tableau de pixels, **caractérisée en ce que** l'unité de traitement d'images est agencée pour exécuter les étapes du procédé selon l'une des revendications 1 à 11.

**13.** Programme informatique comprenant des instructions qui, lorsqu'il est exécuté par une unité de traitement, amènent l'unité de traitement à exécuter les étapes du procédé selon l'une des revendications 1 à 11.

Fig. 1

Fig. 2

Fig. 3

## REFERENCES CITED IN THE DESCRIPTION

**Patent documents cited in the description**

- US 2011102624 A1
- US 2006126127 A1
- WO 2020010638 A1
- KR 100690342 B1

- US 2005162531 A1
- US 2004051798 A1
- EP 2419879 B1

**Non-patent literature cited in the description**

- **N. EL-YAMANY**. Robust Defect Pixel Detection and Correction for Bayer Imaging Systems. *IS&T International Symposium on Electronic Imaging*, 2017, 46-51
- **E. CHANG**. Kernel-size selection for defect pixel identification and correction. *Proc. SPIE 6502, Digital Photography III*, 20 February 2007, vol. 65020J
- **S. WANG** ; **S. YAO** ; **O. FAURIE** ; **Z. SHI**. Adaptive defect correction and noise suppression module in the CIS image processing system. *Proc. SPIE Int. Symposium on Photoelectronic Detection and Imaging*, vol. 7384, 73842V-1, 6

- **A. TANBAKUCHI** ; **A. VAN DER SIJDE** ; **B. DILLEN** ; **A. THEUWISSEN** ; **W. DE HAAN**. Adaptive pixel defect correction. *Proc. SPIE Sensors and Camera Systems for Scientific, Industrial and Digital Photography Applications IV*, 2003, vol. 5017, 360-370
- **M. SCHOBERI** ; **J. SEILER** ; **B. KASPER** ; **S. FOESSEL** ; **A. KAUP**. Sparsity-based detect pixel compensation for arbitrary camera raw images. *IEEE International Conference on Acoustics, Speech and Signal Processing*, 2011, 1257-1260
- **J. BEDNAR et al.** Alpha-trimmed means and their relationship to median filters. *IEEE Transactions on Acoustics, Speech, and Signal Processing*, 01 February 1984, vol. 32 (1), 145-153